# EUROPEAN PATENT APPLICATION

(11) **EP 2 209 086 A1**
(43) Date of publication of application: **21.07.2010**
(21) Application number: 09150632.9
(22) Date of filing: 15.01.2009
(51) Int. Cl.: G06T 3/40, G06T 5/50

(54) **Image processing**

(71) Applicant: Telefonaktiebolaget L M Ericsson (publ), 164 83 Stockholm (SE)
(72) Inventor: Xu, Sanbao, SE-224 77, Lund (SE)
(74) Representative: Boesen, Johnny Peder

(57) **Abstract**

Increasing spatial resolution of image frames in a sequence of image frames is described. Processing of a reference image frame and a current image frame is performed that involves updating a resulting image frame with data resulting from the processing. Calculation (203) of an upsampled current frame is performed by upsampling the current frame with an upsampling factor and interpolating the pixel data of the current frame. Calculation (205) of a plurality of motion vectors is performed via two-dimensional block motion estimation between the upsampled current frame and the reference frame resulting in a respective motion vector for each block. A motion mode in terms of whether the motion of the upsampled current frame is any of a global translation, a rotation and a complex motion is decided, involving analyzing the calculated motion vectors. Warping (207) of the upsampled current frame is performed, using at least one of the calculated motion vectors, the number of motion vectors used being dependent on the decided motion mode. The resulting image frame is updated (209) with the warped upsampled current frame, by weighted averaging using a weighting factor that is a confidence measure for the contribution of the upsampled current frame to the updating, the confidence measure being obtained from the motion vector calculation.

## Description

### Technical field

The present invention relates to processing of digital image frames, involving use of lower spatial resolution images to produce higher spatial resolution images.

### Background

With the widespread availability of embedded imaging devices such as digital cameras and mobile phone cameras, taking pictures or shooting videos in digital form is as simple as pressing a button. Meanwhile, the quest for higher quality image and video is incessant. A critical factor affecting the quality of image and video is the spatial resolution of digital images. Due to high manufacture cost and size limitation it is impractical to increase the spatial image resolution by using high-precision and large optical zoom objectives in embedded imaging devices.

In other words, there are a number of application areas where super-resolution (SR), in contrast to low resolution (LR), is very useful and/or demanded. In consumer electronics, users want imaging devices that produce images with higher resolution than the camera optics can provide and that are yet relatively cheap.

Instead of using expensive optics, the chosen way in which many of today's imaging devices improve the spatial resolution of images is to adopt software image processing techniques. For example, in surveillance and security, it is often necessary to magnify parts of images that contains vehicle's license plate or the face of a suspect etc. In medical imaging (e.g., MR or CT), high resolution images are certainly helpful for diagnosis. In satellite/space imaging and remote sensing, SR is an appealing technique to further increase the image resolution by exploiting multi spectral and multi frame image data. In addition, as more and more households have HDTV sets, conversion of video contents from SDTV (in PAL or NTSC) to HDTV is an emerging need.

Within the field of these application areas, a number of approaches as well as algorithms have been proposed, both spatial domain methods and Fourier domain methods. Drawbacks with Fourier domain methods include limitation to global translation motion model, and neglecting of PSF, degradation, and noise effects. The Fourier domain methods are insufficient to deal with more general motion modes and image degradation such as blur.

An example of such Fourier domain methods is presented in S.P. Kim, N.K. Bose, and H.M. Valenzuela, "Recursive reconstruction of high resolution image from noisy undersampled multiframes", IEEE Trans. on Acoustics, Speech and Signal Processing, vol.38, no.6, pp.1013-1027, 1990.

Many of the spatial domain methods involve conversion of 2D images into 1 D vectors before performing the computations. A drawback with the spatial domain methods is that they require much memory during the computations, due to using a 1 D scan-vector to represent a 2D image and adopting a state space approach, i.e. Kalman filtering, to solve the reconstruction problem in an extremely high dimension by matrix operations. For example, if the input LR image is NxN pixels, then the matrices in the system model are of size f²N² x f²N² where f is the zooming factor.

An example of such a 1 D model is presented in M. Elad and A. Feuer, "Superresolution restoration of an image sequence: adaptive filtering approach", IEEE Trans. on Image Processing, vol. 8, pp. 387-395, Mar. 1999; Wang, C., et al, "Improved Super-Resolution Reconstruction From Video", IEEE Trans. on Circuits and Systems for Video Technology, Nov. 2006, Vol. 16, No. 11, pages 1411-1422.

### Summary

In order to improve on prior art solutions there is provided, according to a first aspect, a method of increasing spatial resolution of image frames in a sequence of image frames. In the method, processing of a reference image frame and a current image frame is performed, involving updating a resulting image frame with data resulting from the processing. Specifically, the method comprises calculating an upsampled current frame by upsampling the current frame with an upsampling factor and interpolating the pixel data of the current frame, calculating a plurality of motion vectors by performing two-dimensional block motion estimation between the upsampled current frame and the reference frame resulting in a respective motion vector for each block, deciding a motion mode in terms of whether the motion of the upsampled current frame is any of a global translation, a rotation and a complex motion, the deciding involving analyzing the calculated motion vectors, performing warping of the upsampled current frame, using at least one of the calculated motion vectors, the number of motion vectors used being dependent on the decided motion mode, and updating the resulting image frame with the warped upsampled current frame, by weighted averaging using a weighting factor that is a confidence measure for the contribution of the upsampled current frame to the updating, the confidence measure being obtained from the motion vector calculation.

In other words, a method of improving spatial resolution of image frames is provided that is different with respect to prior art methods. For example, the method operates in a spatial two-dimensional space, i.e. it is image-based, rather than in a one-dimensional space, i.e. image lines concatenated into a long vector. This greatly reduces the huge memory requirement that exists in prior art state space approaches, i.e. exact Kalman filtering, where higher dimensional matrix operations are needed. In other words, there is no need for maintaining and updating of a Kalman filter gain matrix, a state-vector mean matrix, and a covariance matrix. Instead, the present method simply makes use of a confidence measure for each input image frame (i.e. current frame) to update the resulting image frame. The rationale behind this is that each input image frame makes different contribution, due to its own different motion, to the resulting image frame.

Embodiments include those where the confidence measure is inversely proportional to a prediction error obtained from the calculation of the at least one motion vector.

The accuracy of estimated motion vector(s) for each input image frame may vary because of momentous motion or an odd output of the motion estimation algorithm used. The result of this is that each warped, i.e. predicted, image behaves differently, some being more accurate, others less accurate. Therefore, the prediction errors of each input image may be used to indicate how well each image frame contributes to the improved resulting image frame. Hence, the prediction error may used as the confidence measure to weight each input image frame during the updating. This not only saves memory, but is also computation efficient, due to the fact that a prediction error is easy to calculate.

With respect to the motion estimation, embodiments of the method include those where the motion vector calculation is performed with an adaptive search block-matching algorithm using sub-pixel precision.

In other words, an improved way of performing motion estimation is used in that it may involve block-wise treatment. In situations where the block partition of an input image frame is relatively small, block-wise motion estimation is capable of dealing with complex motion in an efficient way. Moreover, computation efficiency is further improved by combining sub-pixel precision motion estimation with an adaptive search, e.g. Diamond search.

Embodiments include those where, in case the deciding involves deciding that the motion mode is a global translation of the upsampled current frame, the warping is performed using one motion vector that represents the motion of the upsampled current frame, and in case the deciding involves deciding that the motion mode is any of a rotation and a complex motion of the upsampled current frame, the warping is performed block-wise using a plurality of motion vectors that represent the motion of respective blocks of the upsampled current frame.

Moreover, the performance of the warping and the updating may conditionally be performed such that the warping and updating is omitted in case the analysis of the motion vectors indicate a motion complexity that is larger than a threshold complexity.

That is, the determination of a motion mode may provide an indication of whether the motion between the current frame and the reference frame is a global translation, contains a rotation, or is a more complex type, such as affine, projective, non-rigid, etc. If it is a global two-dimensional translation, then a single motion vector is calculated for the entire input image frame. Otherwise, block-based motion estimation is used; that is, a motion vector is provided for each block of the image. In an extreme case, as handled in some embodiments of the method, if the motion is found to be so complicated that the estimated motion vector does not give a good prediction, that particular input frame may be excluded from contributing to the resulting image.

Embodiments of the method include those where the performance of the calculation of an upsampled current frame, the calculation of a plurality of motion vectors, the decision of a motion mode, the warping, and the updating is repeated a predetermined number of times using successive current image frames that are either subsequent to the reference image frame or prior to the reference image frame.

This provides flexibility when implementing the method. For example, by using a sequence of current image frames that are prior to the reference image frame, the method is very useful in processing video sequences.

The method may in some embodiments be performed in a recursive manner involving the obtaining of a reference image frame and repeated obtaining of the current image frame, upsampling calculation, motion vector calculation, decision of a motion mode, and warping and the updating until processing of a predefined number of current image frames has been performed.

Such embodiments have an effect that only one reference frame is needed and the resolution increase processing can start from the second input frame (or the second frame of each group of *N* images). This is advantageous in that it enables real-time processing, which is desirable in, e.g., video sequence applications.

In a second aspect, there is provided an apparatus comprising processing means and memory means that are configured to perform the method as summarized above. The apparatus according to the second aspect may, according to a third aspect, be comprised in a mobile communication device, and a computer program according to a fourth aspect may comprise software instructions that, when executed in a computer, performs the method according to the first aspect. These further aspects provide corresponding effects and advantages as discussed above in connection with the first aspect.

### Brief description of the drawings

Embodiments will now be described with reference to the attached drawings, where:
figure 1 is a functional block diagram that schematically illustrates a mobile communication device,
figure 2 is a flow chart of image processing, and
figures 3a-c illustrate results of image processing.

### Detailed description of embodiments

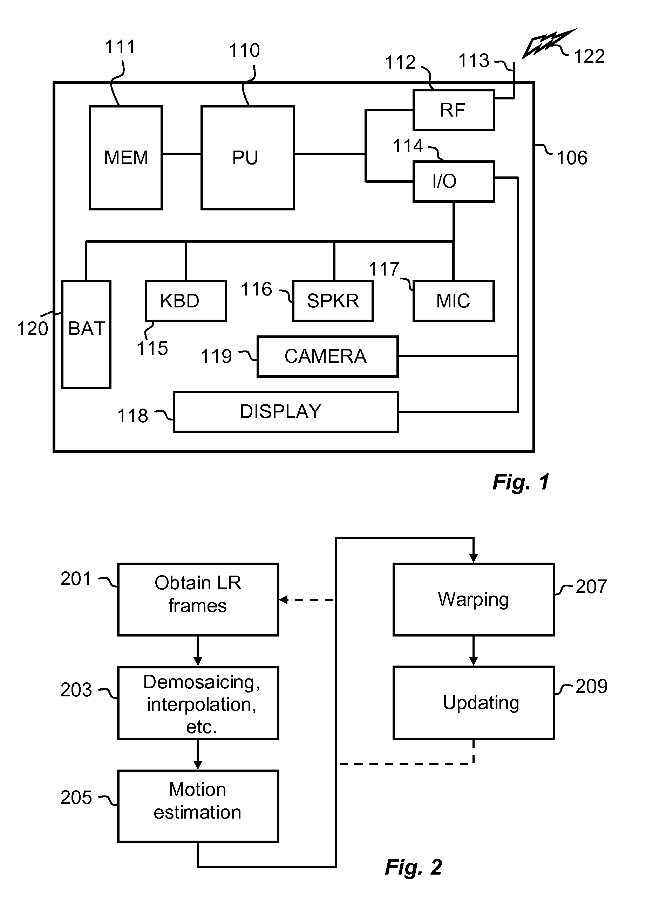

Figure 1 illustrates schematically an arrangement in which image processing as summarized above may be realized. The arrangement is in figure 1 exemplified by a mobile communication device 106, e.g. a mobile phone. Although figure 1 shows an essentially complete mobile phone, it is possible to realize an arrangement that embodies image processing as summarized in the form of a subset of mobile phone functional units (including hardware as well as software units), e.g. in the form of a so-called mobile platform.

The communication device 106 comprises a processor 110, memory 111, a battery 120 as well as input/output units in the form of a microphone 117, a speaker 116, a display 118, a camera 119 and a keypad 115 connected to the processor 110 and memory 111 via an input/output interface unit 114. Radio communication via an air interface 122 is realized by radio circuitry (RF) 112 and an antenna 113. The processor 110 makes use of software instructions stored in the memory 111 in order to control, in conjunction with logic circuitry incorporated in the processor 110 as well as in other parts of the device 106, all functions of the device 106, including the image processing as summarized above and described in more detail below. The battery 120 provides electric power to all other units that reside in the mobile communication device 106. Details regarding how these units operate in order to perform normal functions within a mobile communication network are known to the skilled person and are therefore not discussed further.

It is to be noted that the illustration in figure 1 of a mobile communication device with a camera is not to be interpreted as limiting. That is, realization of the image processing summarized above is only one example and it is foreseen that it is useful in any device that has processing capabilities and where image processing is an issue. For example, such image processing may be used in high definition media systems, including TV sets, media players etc., where lower definition video content is re-scaled to high definition video content.

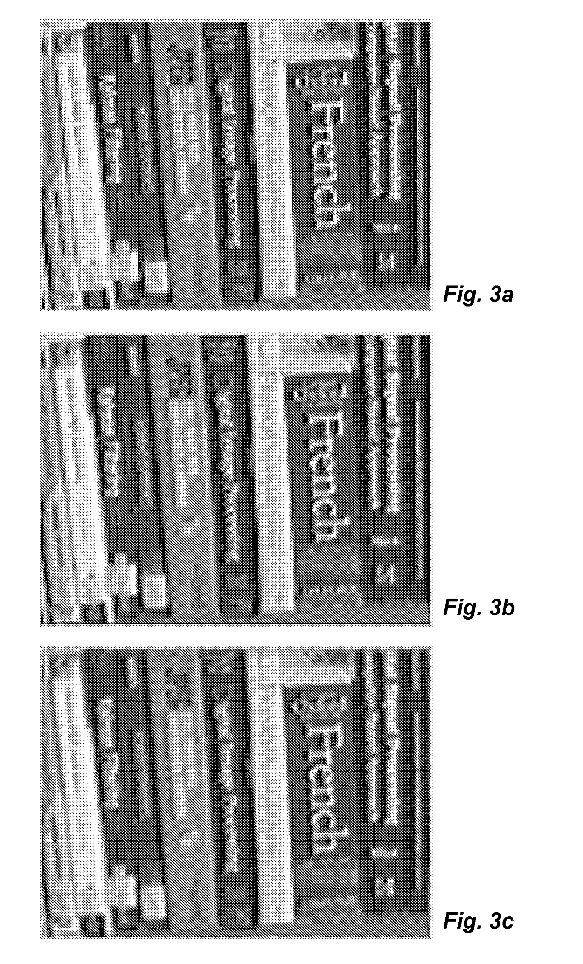

Now with reference to figures 2 and 3, a method will be described that increases spatial resolution of image frames. In this example, the method will be described in terms of a zooming process, utilizing a sequence of images that has been obtained, e.g., via a camera in a mobile communication device such as the device 106 in figure 1.

In an obtaining step 201, a sequence of image frames is obtained, e.g. by the use of a camera such as the camera 119 in the device 106 in figure 1.

In a processing step 203, each individual image frame is upsampled, using a specified or required zooming factor. One image frame is designated as a reference image frame and is not subjected to upsampling. Demosaicing is also carried out at this step in the case the input images are color filter array (CFA) filtered patterns. Furthermore, the upsampled image frames are interpolated using, for example, a linear phase least square error minimized 2D FIR filter. However, interpolating with other filters like bicubic filter or spline filter is also possible.

Estimation of inter-frame motion is performed in a motion estimation step 205. Here, the first image frame in the obtained sequence is selected as the reference frame and then motion vectors are calculated between the reference frame and each successive image frame subsequent to the reference image frame. An alternative to selecting the first image frame as the reference frame, it is possible to select the latest image frame as the reference frame and then compute the motion vectors between each of the previous frames and the reference frame. This is especially useful for improving spatial resolution in video output, i.e. long sequences of image frames that are subjected to continuous image processing as described here. That is, in the former case (the first image being the reference in a group of *N* images), the system needs to wait for completing the processing of the *N-1* subsequent images before it can produce a high resolution image. In contrast, in the latter case, the system has access to (received) the previous *N-1* images and has already processed all or most of them, so that it can output a high resolution image without much delay (except in the very beginning of a video sequence). Therefore, this can reduce the latency time between the video input and output,

During the motion estimation step 205, the motion is estimated with sub-pixel precision between the reference image frame and each upsampled current image frame. It has been found that ¼ pixel precision provides good results (although other values for the subpixel precision can also be applied). The motion estimation is done in a block-based manner. That is, the image frame being considered is divided into blocks and a motion vector is calculated for each block. The motion vectors are calculated, per block, using an adaptive search approach.

When the motion vectors have been calculated for an image frame, a motion mode decision is performed. This entails deciding whether the motion of the current frame in relation to the reference frame is a global translation (two-dimensional), contains a rotation, or is a more complex mode.

Motion parameters are then established based on the decided motion mode. If the motion is a global translation, a single motion vector is provided for the whole image. Otherwise, more complex motion parameters describing the motion field are provided for use in a following warping step.

In a warping step 207, inter-frame warping is then performed. Each upsampled current frame is warped to a resulting image, which is to be updated and acts as a base image, by the calculated motion vectors. When warping a cropped part of an image, it may happen that some areas around the boundaries of the cropped image are missing. This problem can be avoided by accessing a larger than the cropped part of the original image during the warping.

Depending on the product of the upsampling (zooming) factor, *f*, and the sub-pixel accuracy, *1*/*p*, used in the motion estimation step 205, interpolation may be needed in the warping step. This is the case if *f*/*p* is not an integer value. Also, if the motion is block-based, the warping is performed block-wisely. It is to be noted that the warping may be done in any direction, forward as well as reverse.

Then, in an updating step 209, updating of the resulting image is performed by weighted averaging. The weighting factor for each individual input image frame is determined by the error between its predicted image or block and the reference image or block in the reference image. The smaller the prediction error, the better the prediction (warped) image and hence the higher the confidence of the warped image, relatively to other input frames. Such updating strategy is much more efficient than, e.g., a strict Kalman filtering updating.

In some more detail, considering block-based motion estimation, the motion of an image block in the reference image is estimated between the frames in the frame sequence. Using the estimated motion of the block, it is possible to predict an image block in the target image (i.e. the resulting image after warping) from the original block in the reference image. However, due to the complexity of real images, it is unlikely that a perfect prediction is obtained (the predicted block being exactly the same as the true block in the target image, unless the images are simple and synthetic). In other words, there is always en error between the predicted block and the true block in the target image. This error is called "prediction error", and is usually the sum of the pixel-wise differences between the two blocks. The prediction error indicates to a certain extent how good a prediction is. If the prediction error is very small (although, quantitatively, it also depends on the block size used in the motion estimation), then it is reasonable to expect that a good prediction has been made. On the contrary, if the prediction error is very large, then the prediction made is most probably a bad one.

As illustrated by the dashed connection from the updating step 209 and the obtaining step 201, the algorithm, or procedure, may be performed in a recursive manner, in the sense that the processing is performed as the image frames are continuously obtained. That is, on a per signal sample basis, where "per signal sample" corresponds to each input image or video frame.

This is in contrast to a batch algorithm, which requires access to all signal samples, i.e. all image frames in the present case, in order to begin processing. It must wait for the signal collection to complete and therefore has limitations in real-time applications such as processing of video sequences. Recursive processing, on the other hand, can almost immediately start to process the signal (possibly with a very small delay in the beginning to wait for the first few signal samples). It does some operations defined by the algorithm to every input image or frame that incessantly feeds into the algorithm (or a system configured to execute the algorithm).

The recursive embodiment produces a high resolution image from every group of *N* input images. The algorithm only needs one reference frame (stored in memory), and it can start the resolution increase processing from the second input frame (or the second frame of each group of *N* images). This has the effect of having a minimal response time.

Hence, to summarize a recursive embodiment of the image processing algorithm, assuming that the first image frame is used as the reference image frame. The processing is then as follows: during the obtaining step 201, the first image is obtained and stored in memory and the second image is obtained. The algorithm according to steps 203-209 is then executed for the first time. That is, the processing of steps 203-209 is applied to the second input image. This results in an updated high resolution image frame.

The third image frame is then obtained in step 201 and the recursive part of the algorithm is run a second time, now applied on the third image. The high resolution image frame is updated again. This procedure is repeated until the end of the image group (N images) at which point an output high resolution image has been produced. The whole processing can then start all over again, for example to produce a high resolution video.

As an alternative to the recursive embodiment, it is possible to run the image processing algorithm in a "modified batch mode". That is, instead of waiting for the entire signal length (which a generic batch method will require), a modified batch embodiment starts to do processing when sufficient signal samples (image frames) are available. In the case of multi-frame super resolution, it is not practical to use every image within a very long low resolution image or video sequence to produce a single high resolution image, since the contents in the images that are separated long enough in time may be totally different. Therefore, it is appropriate to specify a predefined number (*N*) of images from which a high resolution image is produced (typically, *N*=10∼30). However, such a modified batch method still needs to wait for *N* images to be captured into memory. Thus it has certain time of delay for every produced high resolution image, compared to a recursive embodiment.

Although the steps of the method are illustrated as a sequence in figure 3, it is of course possible to perform much of the processing in a parallel manner in processing circuitry capable of such processing, thereby optimizing calculation speed.

Now with reference to figures 3a-c, results from image processing as described above will be shown. The example used is obtained from the University of California, Santa Cruz in the publicly available Multi-Dimensional Signal Processing Research Group (MDSP) Super Resolution (SR) data set, available at *http:*//*www.ee.ucsc.edu*/*∼milanfar*/*software*/*sr-datasets.html*. Specifically, the example is from a sequence ("Bookcase 1 (Small)") consisting of 30 color image frames of size 91x121 picture elements. The image frames may, e.g., be obtained with a camera, such as the camera of the device 106 in figure 1, and the image frames approximately follow a global translational motion model.

Figure 3a shows a blow-up of the first frame of the sequence, which clearly shows the limited spatial resolution of the 91x121 picture element image frame.
Figure 3b shows an upsampled (by a factor 4) and interpolated version of the first frame. Figure 3c shows the resulting image from processing in accordance with the method described above, using all 30 image frames in the sequence. As figure 3c clearly shows, spatial resolution has increased and also color artifacts and color errors around the edges have been reduced.

## Claims

1. A method of increasing spatial resolution of image frames in a sequence of image frames by processing of a reference image frame and a current image frame, involving updating a resulting image frame with data resulting from said processing, the method comprising:
- calculating (203) an upsampled current frame by upsampling the current frame with an upsampling factor and interpolating the pixel data of the current frame,
- calculating (205) a plurality of motion vectors by performing two-dimensional block motion estimation between the upsampled current frame and the reference frame resulting in a respective motion vector for each block,
- deciding a motion mode in terms of whether the motion of the upsampled current frame is any of a global translation, a rotation and a complex motion, the deciding involving analyzing the calculated motion vectors,
- performing warping (207) of the upsampled current frame, using at least one of the calculated motion vectors, the number of motion vectors used being dependent on the decided motion mode, and
- updating (209) the resulting image frame with the warped upsampled current frame, by weighted averaging using a weighting factor that is a confidence measure for the contribution of the upsampled current frame to the updating, the confidence measure being obtained from the motion vector calculation.

2. The method claim 1, where the confidence measure is inversely proportional to a prediction error obtained from the calculation of the at least one motion vector.

3. The method of claim 1 or 2, where the motion vector calculation is performed with an adaptive search block-matching algorithm using sub-pixel precision.

4. The method of any of claims 1 to 3, wherein:
- in case the deciding involves deciding that the motion mode is a global translation of the upsampled current frame, the warping is performed using one motion vector that represents the motion of the upsampled current frame, and
- in case the deciding involves deciding that the motion mode is any of a rotation and a complex motion of the upsampled current frame, the warping is performed block-wise using a plurality of motion vectors that represent the motion of respective blocks of the upsampled current frame.

5. The method of any of claims 1 to 4, where the performance of the warping and the updating is conditionally performed such that the warping and updating is omitted in case the analysis of the motion vectors indicate a motion complexity that is larger than a threshold complexity.

6. The method of any of claims 1 to 5, where the performance of the calculation of an upsampled current frame, the calculation of a plurality of motion vectors, the decision of a motion mode, the warping, and the updating is repeated a predetermined number of times using successive current image frames that are subsequent to the reference image frame.

7. The method of any of claims 1 to 5, where the performance of the calculation of an upsampled current frame, the calculation of a plurality of motion vectors, the decision of a motion mode, the warping, and the updating is repeated a predetermined number of times using successive current image frames that are prior to the reference image frame.

8. The method of any of claims 1 to 7, performed in a recursive manner involving the obtaining of a reference image frame and repeated obtaining of the current image frame, upsampling calculation, motion vector calculation, decision of a motion mode, and warping and the updating until processing of a predefined number of current image frames has been performed.

9. An apparatus comprising processing means (110) and memory means (111) that are configured to perform the method of any of claims 1 to 8

10. A mobile communication device (106) comprising the apparatus of claim 9.

11. A computer program comprising software instructions that, when executed in a processor, performs the method of any of claims 1 to 8.
